# EUROPÄISCHE PATENTSCHRIFT

(11) **EP 1 767 882 B1**
(45) Veröffentlichungstag und Bekanntmachung des Hinweises auf die Patenterteilung: **31.10.2018**
(21) Anmeldenummer: 06019514.6
(22) Anmeldetag: 19.09.2006
(51) Int. Cl.: F24S 60/10, F24S 70/60, F28D 20/02

(54) **Solarabsorber**
Solar absorber
Absorbeur solaire

(30) Priorität: 27.09.2005 DE 102005046259; 02.11.2005 AT 17922005
(43) Veröffentlichungstag der Anmeldung: 28.03.2007
(73) Patentinhaber: Vaillant GmbH, 42859 Remscheid (DE)
(72) Erfinder: Benabdelkarim, Mohamed, 44000 Nantes (FR)
(74) Vertreter: Hocker, Thomas

(56) Entgegenhaltungen:
- EP-A2- 0 095 187
- WO-A-85/00212
- WO-A2-01/53756
- DE-A1- 2 754 873
- DE-A1- 3 910 356
- DE-A1- 10 043 533
- DE-A1- 19 815 521
- FR-A1- 2 503 855
- JP-A- 59 138 862
- US-A- 4 111 189

## Beschreibung

Die Erfindung bezieht sich auf einen Solarabsorber mit einem Gehäuse und fluidführenden Leitungen, wobei innerhalb des Gehäuses die fluidführende Leitungen in einem Phasenumwandlungswärme speicherndem Medium geführt werden.

Aus dem Stand der Technik sind Solarabsorber bekannt, in welchen ein Fluid erhitzt wird, um sodann einen Warmwasserspeicher thermisch zu beladen. Sehr häufig finden sehr voluminöse Warmwasserspeicher Verwendung. Ferner ist bekannt, dass unterhalb von 55° C in Warmwasserspeichern die Gefahr der Legione Ilenbildung besteht. Als Folge dessen werden Solarspeicher meistens nur mit solarer Energie vorgeheizt und zumindest in bestimmten Abständen durch eine weitere Wärmequelle über 55° C erhitzt, damit einerseits die Legionellen absterben und andererseits ein entsprechender Warmwasserkomfort zur Verfügung seht.

Aus der WO 85/00212 A, FR 2 503 855 A und DE 39 10 356 A sind Solarabsorber mit Phasenumwandlungsenergie speichernden Medien bekannt. Aus US 4 111 189, EP 95 187 A, DE 100 43 533 A und DE 198 15 521 A sind Solarsysteme mit Phasenumwandlungsenergie speichernden Medien in einem Solarspeicher bekannt. DE 27 54 873 A offenbart einen Solarabsorber mit Rippen, welche Wellen- oder Zick-Zack-Form haben können. Die Spitzen der Wellen oder Rippen haben Kontakt zur Scheibe des Kollektors.

GB 387 828 zeigt einen Solarabsorber, dessen Oberfläche dem Negativ aneinandergereihter Kegelstümpfe entspricht.

Aus WO 01/53756 A2 ist ein Solarabsorber mit Latentspeichermaterial bekannt. Das Latentspeichermaterial ist hierbei in Platten untergebracht, welche ein über Einbuchtungen auf beiden Seiten verfügen; hierdurch wird auch die absorbierende Oberfläche vergrößert.

Aufgabe der vorliegenden Erfindung ist es, die Wärmekapazität des eigentlichen Solarabsorbers und / oder des Solarspeichers zu erhöhen und somit das notwendige Speichervolumen zu reduzieren.

Bei dem erfindungsgemäßen Solarabsorber gemäß Anspruch 1 weist die Oberfläche des Mediums auf der der Sonneneinstrahlung zugewandten Seite eine nichtebene Struktur mit kegelförmigem Querschnitt mit vorzugsweise spitzen Winkeln auf, wobei die Struktur eine kontinuierliche Erstreckung senkrecht zu diesem Querschnitt, aufweist, wobei das Profil der kegelförmigen Oberfläche durch Trennwände, welche senkrecht zu der kontinuierlichen Erstreckung der Struktur verlaufen, unterbrochen ist. Es ergibt sich der Vorteil, dass reflektierte Sonnenstrahlen nicht wieder in die Umgebung reflektiert werden, sondern im Solarabsorber verbleiben. Es ergibt sich weiter der Vorteil, dass konvektiver Wärmeaustausch durch Behinderung einer Strömung vermieden werden kann.

Gemäß den Merkmalen des Anspruchs 2 handelt es sich bei dem Phasenumwandlungswärme speicherndem Medium um Paraffin, und bei dem Phasenwechsel somit um einen Übergang von flüssig zu fest.

Paraffin (CₙH₂ₙ₊₂) stellt eine Sammelbezeichnung für gesättigte Kohlenwasserstoffgemische dar, die hauptsächlich aus Erdöl gewonnen werden. Paraffine, die auch als Wachse bezeichnet werden, sind organische Stoffe, die nach der Raffination geruchlos, geschmacklos und ungiftig sind. Es wird zwischen Normalparaffine und Isoparaffine unterschieden. Normalparaffine sind einfache, lang gestreckte Ketten. Isoparaffine haben von einer langen Grundkette verzweigende Äste. Für wärmetechnische Anwendungen kommen überwiegend Normalparaffine zum Einsatz. Die Schmelztemperatur der Paraffine liegt zwischen 30 bis 90°C bei einer Zahl n zwischen 18 und 50. Mit steigender Molekülkettenlänge bzw. steigender Molmasse nimmt die Schmelztemperatur des Materials stetig zu. Paraffine sind gut für thermische Anwendungen geeignet. Der Vorteil der Paraffine liegt in der Nutzung der latenten Wärme während des Phasenwechsels. Ein geringerer Teil wird als sensible Wärme gespeichert. Die spez. Wärmekapazität von Wärmeparaffin liegt bei etwa 2,1 kJ/(kg•K), die Schmelzenthalpie bei 180 bis 230 kJ/kg. Hierdurch sind Paraffine bestens zur Wärmespeicherung geeignet. Paraffin speichert ein Vielfaches der Wärme von Wasser.

Gemäß den Merkmalen des Anspruchs 3 ist das Paraffin in einer porösen Graphitmatrix untergebracht, das Graphit nimmt somit einerseits Paraffin auf, und dient andererseits dazu, Infrarotwärme gut zu absorbieren.

Die Verfahrensansprüche schützen eine besonders vorteilhafte Betriebsweise der Solarabsorber gemäß den Ansprüchen 1 bis 3.

Die Erfindung wird nun anhand der Zeichnungen detailliert erläutert.
Figur 1 zeigt einen Solarabsorber,
Figur 2 einen Solarabsorber mit einem Warmwasserspeicher,
Figur 3 einen erfindungsgemäßen Solarabsorber
Figur 4 einen Solarabsorber mit Phasenumwandlungswärme speicherndem Medium in einem Warmwasserspeicher,
Figur 5 und 6 einen Solarabsorber sowie Figuren 7 und 8 den erfindungsgemäßen Solarabsorber im Detail.

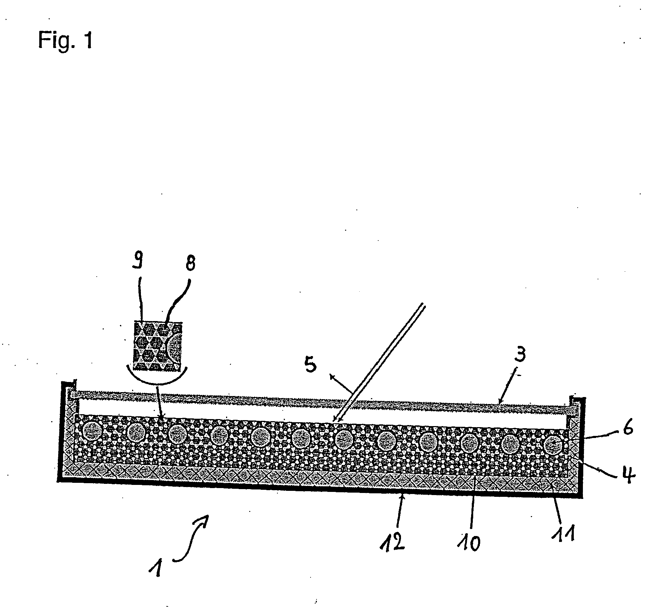

Figur 1 zeigt einen Solarabsorber mit einem Gehäuse 12 und einer Glasplatte 3, durch welche infrarote Sonnenstrahlung 5 in den Absorber gelangen kann. Innerhalb des Rahmens 12 befindet sich eine Wärmedämmung 11. Hierin wiederum befindet sich ein Paraffinbehälter 10, bestehend aus einer porösen Graphitmatrix 8, in welcher sich Paraffin 9 befindet. Inmitten der porösen Graphitmatrix 8 sind fluidführende Leitungen 6 untergebracht. Im konkreten Fall handelt es sich um Kupferleitungen 4, in welchen Sole strömt.

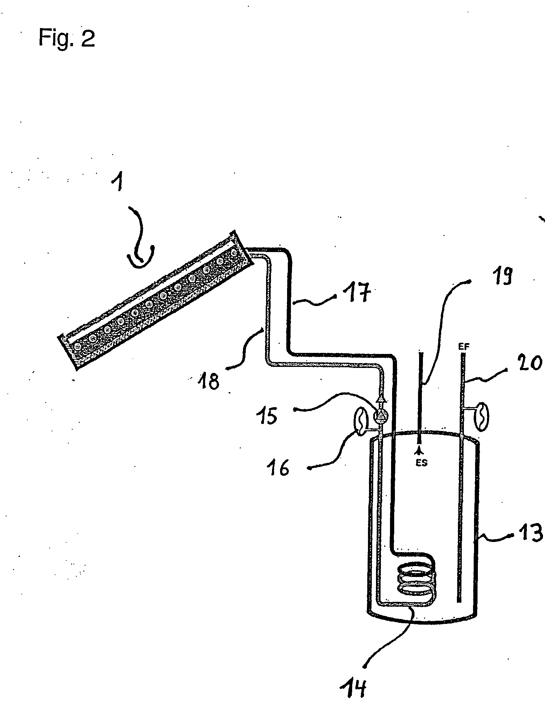

Figur 2 zeigt einen Solarabsorber 1, welcher über eine Vorlaufleitung 17 und Rücklaufleitung 18, in der sich eine Pumpe 15 befindet, mit einem Solarspeicher 13 verbunden ist. Die Vorlaufleitung 17 führt zu einem Wärmetauscher 14, in dem die vom Solarabsorber 1 erwärmte Sole abgekühlt wird und Wärme auf den Solarspeicher 13 abgibt. Die Sole wird von der Umwälzpumpe 15 gefördert. Zum Ausgleich temperaturbedingter Volumenschwankungen befindet sich ein Ausdehnungsgefäß 16 in der Rücklaufleitung 18. Über eine Warmwasserentnahmeleitung 19 kann warmes Wasser aus dem Speicher entnommen werden. Über die Zuführleitung 20 wird dem Solarspeicher 13 Wasser wieder zugeführt. Nicht dargestellt sind die Brauchwasserverbraucher und die konventionelle Vorrichtung zur Speicherwassererhitzung.

Bei Sonnenschein wird der Solarabsorber 1 erhitzt, und sobald der Solarabsorber 1 eine Temperatur erreicht, die größer als die Solarspeichertemperatur ist, beginnt die Umwälzpumpe 15 zu laufen und somit den Warmwasserspeicher 13 zu laden. Sobald der Warmwasserspeicher 13 geladen ist, z. B. wenn er eine Temperatur von 60° C erreicht hat, wird die Zirkulationspumpe 15 abgeschaltet. Da die Sonne in diesem Fall nach wie vor den Solarabsorber 1 erhitzt, beginnt das Paraffin 9 in dem Solarabsorber 1 zu schmelzen und somit Kristallisationsenergie aufzunehmen. Die Energie des Phasenübergangs ist nun im Paraffin 9 gespeichert. Bei einem konventionellen Solarabsorber wäre diese Energie verloren. Bei Bewölkung oder Sonnenuntergang ist zunächst die Temperatur in dem Solarabsorber 1 noch oberhalb der Temperatur des Phasenwechsels, z. B. oberhalb 65° C. Kühlt sich das Paraffin ab, so kristallisiert es und die Kristallisationsenergie wird frei. Diese wird über das Graphit an die soleführenden Leitung 17 an den Warmwasserspeicher 13 abgegeben.

Bei einem standardmäßigen Solarabsorber könnte nach dem Sonnenuntergang oder bei Bewölkung keine weitere Energie mehr freigesetzt werden. Mit dem erfindungsgemäßen Solarabsorber kann das Speichervolumen um 30% bis 50% reduziert werden. Neben Paraffin wären auch andere Medien zur Aufnahme der Phasenumwandlungsenergie geeignet, insbesondere Salzgemische. So können beispielsweise Gemische aus Magnesiumnitrat mit Nitraten oder Alkali- oder Erdalkalimetallen verwendet werden. Auch Salzgemische auf der Basis von Magnesiumnitrat und Lithiumnitrat (Mg (NO₃)₂ 6 H₂O und LiNO₃, z.B. 87-92 % Mg (NO₃)₂ 6 H₂O und 8-13 % LiNO₃ Schmelztemperatur 70°C +/- 2 K, Schmelzwärme 54,32 Wh/kg) ist hierzu geeignet.

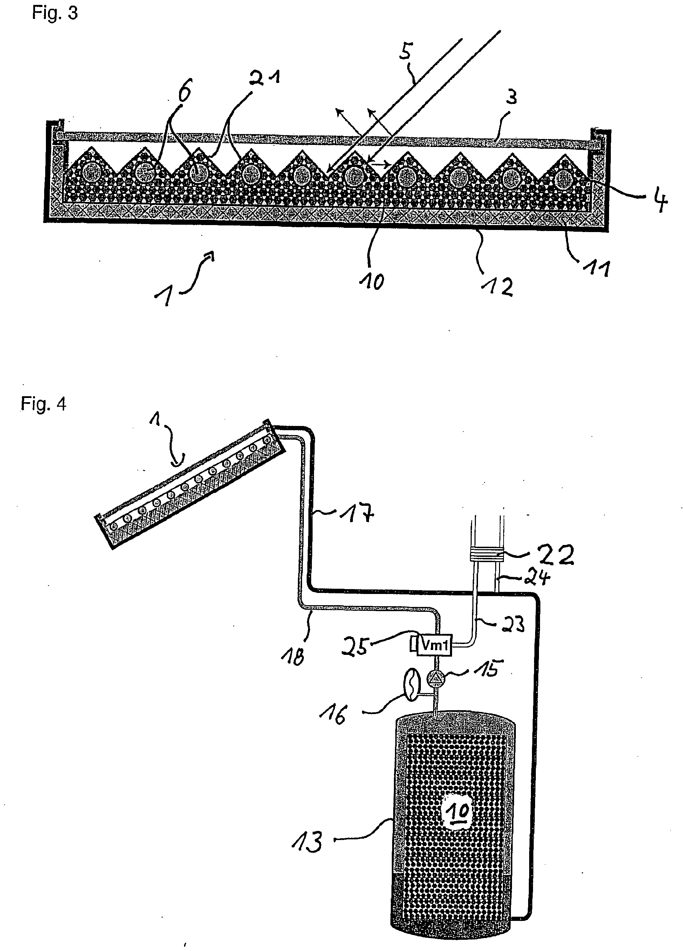

Figur 3 zeigt einen erfindungsgemäßen Solarabsorber 1 als Weiterentwicklung des allgemein dargestellten Solarabsorbers aus Figur 1, bei dem die Oberfläche 21 des Phasenumwandlungswärme speichernde Medium auf der Seite der Glasplatte 3 eine kegelförmige Oberfläche 21 aufweist. Je spitzer die Winkel der Oberfläche 21 sind, desto mehr von der Oberfläche 21 reflektierte Strahlen werden wieder auf die Oberfläche 21 geworfen. Hierdurch wird vermieden, dass reflektierte Strahlung wieder aus dem Solarabsorber 1 gelangt. Andererseits wird die Luftzirkulation im Solarabsorber 1 behindert; durch diese kann Wärme von der Oberfläche 21 zur Glasplatte 3 und von dieser in die Umgebung abgeführt werden. Die kegelförmige Oberfläche 21 führt in einer vorteilhaften Ausgestaltung bis fast zum Kontakt zur Glasplatte 3, so dass nahezu keine Konvektion über die Spitzen geraten kann.

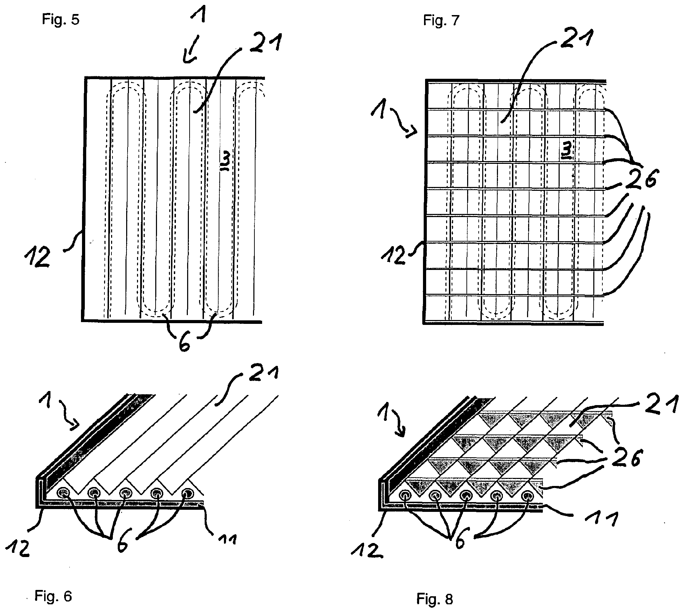

Erfindungsgemäß setzt sich das Profil gemäß Figur 3 in die Tiefe kontinuierlich fort. Dies ist in Figur 5 mit Blick senkrecht zur Glasplatte 3 und in Figur 6 perspektivisch dargestellt. Erfindungsgemäß ist - wie in den Figuren 7 und 8 dargestellt - ein derartiges Profil in den Tälern durch parallele Trennwände 26 zu trennen, so dass auch in den Tälern eine konvektive Strömung vermieden wird.

Figur 4 zeigt einen Solarabsorber 1 mit einem daran angeschlossenen Solarspeicher 13, bei dem im Inneren des Solarspeichers 13 ein Paraffinbehälter 10 angeordnet ist. Paraffin hat eine höhere Wärmekapazität als Wasser, weshalb bei gleicher Baugröße mehr Wärme in einem Solarspeicher 13 gemäß Figur 4 gespeichert werden kann als in einem konventionellen Wasserspeicher.

In der Rücklaufleitung 18 befindet sich stromab der Umwälzpumpe 15 ein Umschaltventil 25, von dem eine Leitung 23 zu einem Sekundärwärmeaustauscher 22 abgeht. Der Sekundärwärmeaustauscher 22 ist - nicht dargestellt - mit einem Heiz- und / oder Brauchwasserkreislauf verbunden. Vom Sekundärwärmeaustauscher 22 führt eine Leitung 24 zur Vorlaufleitung 17.

Beim Ladebetrieb fördert die Umwälzpumpe 15 Sole zwischen Solarabsorber 1 und Solarspeicher 13. Der Solarspeicher 13 mit dem darin enthaltenen Paraffinbehälter 10 wird erhitzt und darin Wärme gespeichert. Wird die Schmelztemperatur überschritten, so nimmt der Paraffinbehälter 10 Wärme auf ohne dass die Temperatur im Solarspeicher 13 steigt. Beim Entladebetrieb schaltet das Umschaltventil 25 um, wodurch die Umwälzpumpe 15 Sole zwischen dem Solarspeicher 13 und dem Sekundärwärmeaustauscher 22 fördert. Wird die Schmelztemperatur unterschritten, so gibt der Paraffinbehälter 10 Wärme ab ohne dass die Temperatur im Solarspeicher 13 fällt.

## Patentansprüche

1. Solarabsorber (1) mit einem Gehäuse (12) und fluidführenden Leitungen (6), innerhalb des Gehäuses (12) die fluidführende Leitungen (6) in einem Phasenumwandlungswärme speicherndem Medium (9) geführt werden, **dadurch gekennzeichnet, dass**
die Oberfläche (21) des Mediums auf der der Sonneneinstrahlung zugewandten Seite eine nichtebene Struktur mit kegelförmigem Querschnitt mit vorzugsweise spitzen Winkeln aufweist, wobei die Struktur eine kontinuierliche Erstreckung senkrecht zu diesem Querschnitt, aufweist, wobei das Profil der kegelförmigen Oberfläche (21) durch Trennwände (26), welche senkrecht zu der kontinuierlichen Erstreckung der Struktur verlaufen, unterbrochen ist.

2. Solarabsorber (1) nach Anspruch 1 **dadurch gekennzeichnet, dass** das Phasenumwandlungswärme speicherndem Medium (9) Paraffin ist.

3. Solarabsorber (1) nach Anspruch 1 oder 2, **dadurch gekennzeichnet, dass** das Phasenumwandlungswärme speichernde Medium in einer porösen Graphitmatrix (8) aufgenommen ist.

4. Verfahren zum Betreiben eines Solarabsorber (1) nach einem der Ansprüche 1 bis 3 um thermischen Beladen eines Solarspeichers (13) mit einer Umwälzpumpe (15) zwischen Solarabsorber (1) und Solarspeicher (13), **dadurch gekennzeichnet, dass** bei geladenem Solarspeicher (13) die Umwälzpumpe (15) abgeschaltet wird, so dass das Phasenumwandlungswärme speicherndem Medium (9) weiter erhitzt wird und Phasenumwandlungsenergie aufnimmt.

5. Verfahren zum Betreiben eines Solarabsorbers (1) nach Anspruch 4, **dadurch gekennzeichnet, dass** die Umwälzpumpe (15) eingeschaltet wird, wenn die Temperatur des Solarspeichers (13) kleiner der Temperatur des Solarabsorbers (1) ist.

## Claims

1. Solar absorber (1) with a housing (12) and fluid conducting conduits (6), wherein within the housing (12) the fluid conducting conduits (6) are conducted in a medium (9) which stores phase transition heat, **characterised in that** the surface (21) of the medium on the side facing the sunlight has a non-planar structure with tapered cross-section with preferably sharp angles, wherein the structure has a continuous extension perpendicularly to this cross-section, wherein the profile of the tapered surface (21) is interrupted by dividing walls (26) which extend perpendicularly to the continual extension of the structure.

2. Solar absorber (1) according to claim 1 **characterised in that** the medium (9) which stores phase transition heat is paraffin.

3. Solar absorber (1) according to claim 1 or 2, **characterised in that** the medium which stores phase transition heat is incorporated in a porous graphite matrix (8).

4. Method for operating a solar absorber (1) according to one of claims 1 to 3 for the thermal charging of a solar storage tank (13) with a circulatory pump (15) between solar absorber (1) and solar storage tank (13), **characterised in that** when the solar storage tank (13) is charged, the circulatory pump (15) is switched off, so that the medium (9) which stores phase transition heat is further heated and takes up phase transition energy.

5. Method for operating a solar absorber (1) according to claim 4, **characterised in that** the circulatory pump (15) is switched on when the temperature of the solar storage tank (13) is less than the temperature of the solar absorber (1).

## Revendications

1. Absorbeur solaire (1) avec un boîtier (12) et des conduits (6) d'acheminement de fluide,
dans lequel les conduits (6) d'acheminement de fluide sont guidés dans un milieu (9) de stockage de chaleur de changement de phase à l'intérieur du boîtier (12), **caractérisé en ce que**
la surface (21) du milieu présente sur le côté tourné vers le rayonnement incident solaire une structure non plane avec une section transversale de forme conique avec des angles de préférence aigus, dans lequel la structure présente une extension continue perpendiculairement à ladite section transversale, dans lequel le profil de la surface (21) de forme conique est interrompu par des parois de séparation (26), qui s'étendent perpendiculairement à l'extension continue de la structure.

2. Absorbeur solaire (1) selon la revendication 1, **caractérisé en ce que** le milieu (9) de stockage de chaleur de changement de phase est de la paraffine.

3. Absorbeur solaire (1) selon la revendication 1 ou 2, **caractérisé en ce que** le milieu de stockage de chaleur de changement de phase est reçu dans une matrice de graphite (8) poreuse.

4. Procédé servant à faire fonctionner un absorbeur solaire (1) selon l'une quelconque des revendications 1 à 3 aux fins d'un chargement thermique d'un accumulateur solaire (13) avec une pompe de circulation (15) entre l'absorbeur solaire (1) et l'accumulateur solaire (13), **caractérisé en ce que** dans le cas d'un accumulateur solaire (13) chargé, la pompe de circulation (15) est désactivée de sorte que le milieu (9) de stockage de chaleur de changement de phase continue à être chauffé et absorbe de l'énergie de changement de phase.

5. Procédé servant à faire fonctionner un absorbeur solaire (1) selon la revendication 4, **caractérisé en ce que** la pompe de circulation (15) est activée quand la température de l'accumulateur solaire (13) est inférieure à la température de l'absorbeur solaire (1).
